# EUROPÄISCHE PATENTSCHRIFT

(11) **EP 1 211 783 B1**
(45) Veröffentlichungstag und Bekanntmachung des Hinweises auf die Patenterteilung: **09.07.2008**
(21) Anmeldenummer: 01125036.2
(22) Anmeldetag: 22.10.2001
(51) Int. Cl.: H02K 5/128

(54) **Nasslaufender elektrischer Antriebsmotor für insbesondere eine Heizungsumwälzpumpe**
Wet rotor electric drive motor particularly for a central heating circulation pump
Moteur d'entraînement électrique à rotor immergé notamment pour une pompe de circulation de chauffage

(30) Priorität: 30.11.2000 DE 10059460
(43) Veröffentlichungstag der Anmeldung: 05.06.2002
(73) Patentinhaber: GRUNDFOS A/S, DK-8850 Bjerringbro (DK)
(72) Erfinder: Rasmussen, Keld Folsach, 9000 Aalborg (DK); Rasmussen, Svend, 8850 Bjerringbro (DK); Larsen, Tom Eklundh, 8860 Ulstrup (DK)
(74) Vertreter: Vollmann, Heiko

(56) Entgegenhaltungen:
- EP-A- 0 963 029
- DE-C1- 19 620 901
- US-A- 5 939 813

## Beschreibung

Die Erfindung geht aus von einem nasslaufenden elektrischen Antriebsmotor für insbesondere eine Heizungsumwälzpumpe, wobei der Motor in einem Spaltrohr einen auf einer Antriebswelle drehfest montierten Rotor aufweist und wobei das Spaltrohr mit einem Permanentmagnetrotor und mit mindestens einem Verdrängerkörper bestückt ist.

Ein solcher Motor ist aus US-A-5,939,813 bekannt. Bei diesem Motor ist innerhalb des Spaltrohres ein Körper eingegliedert, welcher mit einem außerhalb des Spaltrohres angeordneten Körper magnetisch zusammenwirkt, mit dem die axiale Rotorstellung beeinflusst werden kann. Der dort innerhalb des Spaltrohrs vorgesehene Körper stellt somit bezogen auf die im Spaltrohr befindliche Flüssigkeit einen Verdrängerkörper dar.

Nasslaufende Antriebsmotoren für Heizungsumwälzpumpen sind häufig mit einem Rotor der Kurzschlusslauferbauart ausgerüstet, der eine relativ große Länge aufweist. Hieraus ergibt sich die Tatsache, dass das Spaltrohr, in der Regel in Topfform ausgebildet, ebenfalls eine entsprechende Länge aufweisen muss. Andererseits gibt es Motoren mit einem Rotor der Permanentmagnetbauart, wobei dieser Rotor bei gleicher Leistung des Motors kürzer ist als ein Rotor der Kurzschlussläuferbauart. Antriebsmotoren mit einem Permanentmagnetrotor werden in Verbindung mit Heizungsumwälzpumpen verwendet, die für kleinere Leistungen gedacht sind. Aufgrund ihres kürzeren Permanentmagnetrotors weisen die entsprechenden Motoren auf ein kürzeres Spaltrohr auf, in welchem der Permanentmagnetrotor rotiert.

Ausgehend von dem einleitend genannten Stand der Technik, der einen Motor mit Spaltrohr und Permanentmagnetrotor sowie einen im Spaltrohr befindlichen Verdrängerkörper beschreibt, liegt der vorliegenden Erfindung die Aufgabe zugrunde, diesen Motor so auszugestalten, dass er wahlweise mit einem Permanentmagnetrotor oder mit einem Kurzschlussläuferrotor einsetzbar ist, ohne das Spaltrohr zu verändern und ohne dass das im Spaltrohr befindliche Flüssigkeitsvolumen bei Verwendung eines Permanentmagnetrotors größer oder wesentlich größer ist als bei Verwendung eines Kurzschlußläuferrotors.

Diese Aufgabe wird gemäß der Erfindung dadurch gelöst, dass der Verdrängerkörper und der Permanentmagnetrotor zusammen einen Raum einnehmen, der im Wesentlichen dem Raum entspricht, den ein Kurzschlussläuferrotor bei gleicher Leistung des Motors einnehmen würde, damit der Motor für den Einsatz sowohl dieses Kurzschlussläuferrotors als auch des Permanentmagnetrotors geeignet ist, ohne dass das im Spaltrohr befindliche Flüssigkeitsvolumen im letztgenannten Fall größer oder wesentlich größer ist als bei Verwendung des Kurzschlussläuferrotors.

Diese erfindungsgemäße Lösung bringt erhebliche fertigungstechnische und kostenmäßige Vorteile, denn ein und dasselbe Spaltrohr kann für beide Rotorbauarten verwendet werden, also für einen Motor mit einem Kurzschlussläuferrotor oder für einen Motor mit einem Permanentmagnetrotor. Es entfällt somit die Herstellung eines nur für einen Permanentmagnetrotor kürzeren Spaltrohres, wobei angemerkt sei, dass ein Spaltrohr grundsätzlich eine relativ komplizierte Form aufweist, insbesondere wenn es sich um einen Spaltrohrtopf handelt. Durch die Verwendung eines Verdrängerkörpers wird ein sonst freier Raum in dem Spaltrohr ausgefüllt; so dass das Flüssigkeitsvolumen und insbesondere das Atmungsvolumen bei Temperaturänderungen im Spaltrohr während des Betriebs des Motors nicht oder nicht wesentlich größer ist als bei Verwendung eines Kurzschlussläuferrotors. Dadurch wiederum ist auch vermieden, dass kein größerer Anteil an Verunreinigungen mit dem Förderstromanteil, welcher zu Kühl- und Lagerschmierzwecken in das Spaltrohr gelangt, in dieses eingetragen werden kann, wodurch der Betrieb des Rotors nicht mit einem übermäßigen Verschleiß verbunden ist.

In einfacher Ausführungsart kann der Verdrängerkörper vor oder hinter dem Permanentmagnetrotor auf der Antriebswelle starr angeordnet sein. Es ist alternativ jedoch auch möglich, dass der Verdrängerkörper jeweils an dem Spaltrohr drehfest angeordnet ist, so dass er bei laufendem Rotor still steht.

In weiterer Ausgestaltung besteht der Verdrängerkörper aus nicht magnetischem Material, beispielsweise aus Kunststoff. Des Weiteren kann der Verdrängerkörper sowohl als Vollkörper als auch als geschlossener Hohlkörper ausgebildet sein. In einer andere vorteilhaften Ausgestaltung kann der Verdrängerkörper mit Durchflussmittelns versehen sein, dies es gestatten, dass in das Spaltrohr gelangte Förderstromflüssigkeit sicher zu dem Permanentmagnetrotor und zu dem hinteren Motorlager für die Antriebswelle geleitet werden kann. Solche Mittel sind zum Beispiel Kanäle, die den Verdrängerkörper durchqueren oder an seinem Umfang vorgesehen sind, oder ein Ringraum, der z. B. zwischen dem Umfang des Verdrängerkörpers und dem Spaltrohr ausgebildet ist.

Die Erfindung ist nachstehend in Verbindung mit den anliegenden Zeichnungen beispielsweise näher erläutert. Es zeigen:
- Figur 1: Ein erstes Ausführungsbeispiel im Axialschnitt.
- Figur 2: Ein zweites Ausführungsbeispiel im Axialschnitt.
- Figur 3: Ein drittes Ausführungsbeispiel, das perspektivisch und teilweise geschnitten gezeigt ist.

Alle Figuren zeigen von dem jeweiligen elektrischen Antriebsmotor nur dessen Spaltrohrtopf mit den darin vorgesehenen Bestandteilen, weil der übrige Aufbau des jeweiligen Motors nicht Gegenstand der Erfindung ist.

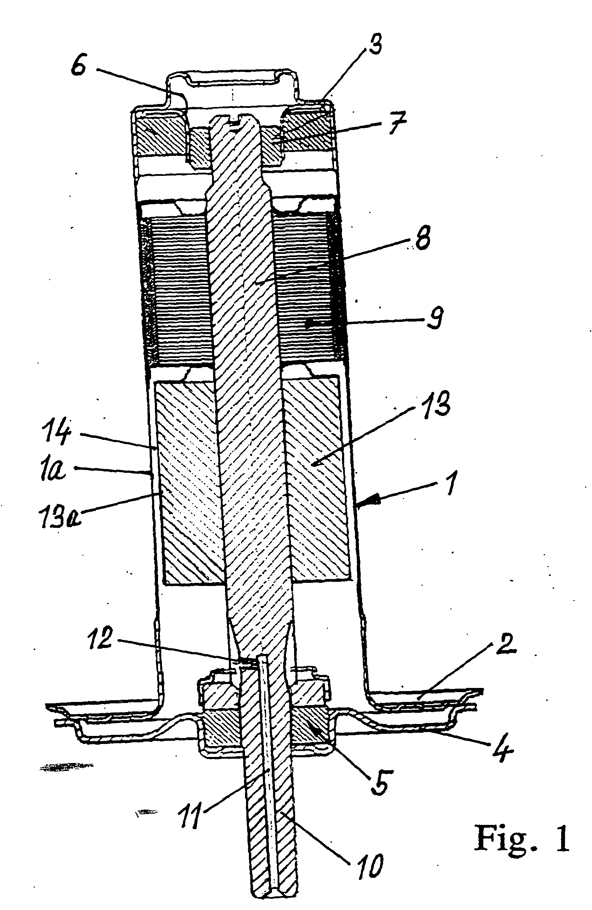

Somit zeigt Figur 1 ein Spaltrohr 1 in Form eines Spaltrohrtopfes mit einem vorderen Flansch 2 und einem hinteren Boden 3. Am vorderen Flansch 2 ist ein Lagerschild 4 befestigt, an welchem in üblicher Weise das vordere Gleitlager 5 angeordnet ist. Am Boden 3 des Spaltrohres 1 ist eine Lagerhülse 6 befestigt, die ein hinteres Gleitlager 7 trägt. In den beiden Lagern 5 und 7 ist eine Antriebswelle 8 gelagert. Das hintere Gleitlager 7 kann auch entfallen, wenn das vordere Gleitlager 5 so konstruiert und gehaltert ist, dass es die Antriebswelle 8 mit dem Rotor des Motors und gegebenenfalls einen weiteren Körper, wie noch erläutert ist, alleine trägt. Als Rotor ist ein Permanentmagnetrotor 9 im Inneren des Spaltrohres auf der Antriebswelle drehfest angeordnet gezeigt.

Ein vorderer Abschnitt 10 der Antriebswelle 8 ragt aus dem Lagerschild 4 heraus und trägt in üblicher Weise ein Pumpenlaufrad einer Umwälzpumpe (nicht gezeigt). Der vordere Abschnitt 10 der Welle 8 ist mit einer Axialbohrung 11 versehen, die sich wenigstens bis hinter das vordere Gleitlager 5 erstreckt und über eine Querbohrung 12 mit dem Innenraum des Spaltrohres 1 kommuniziert. Die Axialbohrung 11 kann auch mit einer weiteren Querbohrung bis zu dem hinteren Lager verlaufen (nicht gezeigt). In bekannter Weise dringt ein Anteil der von dem genannten Pumpenlaufrad geförderten Förderflüssigkeit im Betrieb des Antriebsmotors durch den Lagerspalt des vorderen Lagers 5 und der Antriebswelle 8 in den Innenraum des Spaltrohres 1 und füllt diesen unter Verdrängung der Luft in dem Spaltrohr aus. Dadurch werden der Permanentmagnetrotor 9 gekühlt und auch das hintere Gleitlager 7 geschmiert. Aufgrund unterschiedlichen Druckniveaus bei rotierendem Rotor 9 findet ein gewisser Rückfluss des in dem Spaltrohr 1 befindlichen Förderstromanteils zu Pumpenlaufrad statt, und zwar über die Querbohrung 12 und die Axialbohrung 11.

In Verbindung mit dem Permanentmagnetrotor 9 ist auf der Antriebswelle 8 ein drehfest, beispielsweise durch Festsitz, angeordneter Verdrängerkörper 13 vorgesehen. Im gezeigten Fall befindet sich der Verdrängerkörper vor dem Permanentmagnetrotor; es ist jedoch auch möglich, diesen Verdrängerkörper hinter dem Rotor 9 auf der Welle 8 anzuordnen.

Im Allgemeinen wird der vorzugsweise zylinderförmige Verdrängerkörper 13, dessen Außendurchmesser im Wesentlichen vorzugsweise dem Innendurchmesser des Spaltrohres entsprechen wird, eine axiale Länge aufweisen, die der Längendifferenz zwischen dem Permanentmagnetrotor 9 und einem üblichen Kurzschlussläuferrotor, der für gleiche Motorleistung länger ist als der entsprechende Permanentmagnetrotor, entspricht. Alternativ ist es jedoch möglich, dass die axiale Länge des Verdrängerkörpers 13 kleiner ist als die genannte Längendifferenz, so dass der Verdrängerkörper in diesem Fall nur einen Teil desjenigen Raumanteils des Spaltrohres ausfüllt, der sich darin aus der Längendifferenz zwischen dem Permanentmagnetrotor und dem Kurzschlussläuferrotor ergibt.

In Figur 1 ist der Verdrängerkörper 13 drehfest auf der Antriebswelle 8 angeordnet. Alternativ ist es möglich, den Verdrängerkörper an der Umfangswand des Spaltrohres 1 zu befestigen, so dass sich dieser bei rotierender Antriebswelle nicht mitdreht.

Des Weiteren besteht der Verdrängerkörper 13 vorzugsweise aus einem nichtmagnetischen Material, zum Beispiel aus Kunststoff. Auch ist es möglich, den Verdrängerkörper als Vollkörper auszubilden oder als geschlossenen Hohlkörper vorzusehen.

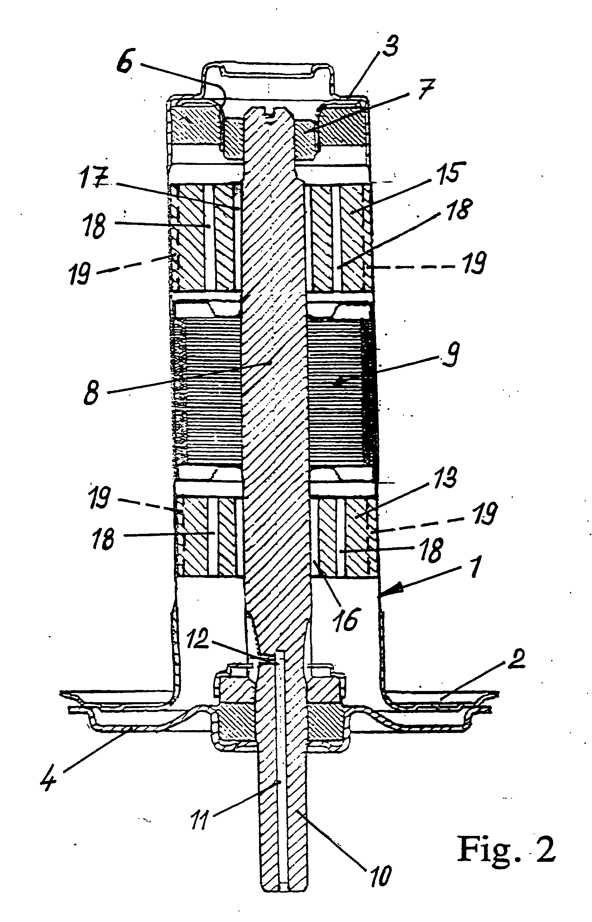

Um sicher zu stellen, dass über dem Lagerspalt des vorderen Gleitlagers 5 in das Innere des Spaltrohres eingedrungene Förderflüssigkeit zu dem Permanentmagnetrotor 9 und gegebenenfalls zu dem hinteren Gleitlager 7 gelangt, sind im Bereich des Verdrängerkörpers 13 Durchflussmittel vorgesehen. Diese können aus einem Ringraum bestehen. Beispielsweise ist in Figur 1 ein äußerer Ringraum zwischen der Umfangswand 1a des Spaltrohres 1 und der Umfangsseite 13a des Verdrängerkörpers 13 ausgebildet. Vorteilhaft ist dabei so vorgegangen, dass der Außendurchmesser des Verdrängerkörpers 13 z.B. um 0,5 - 2,0 mm kleiner ist als der Außendurchmesser des Permanentmagnetrotors 9. Somit ist ein Blockieren des Verdrängerkörpers 13 durch Fremdpartikel in dem Förderstromanteil in dem Spaltrohr 1 weitgehend vermieden. In alternativer oder zusätzlicher Ausgestaltung ist es möglich, dass der Verdrängerkörper 13 mit axialen oder teilweise wendelförmigen Kanälen versehen ist, wie es in Verbindung mit Figur 2 klar wird.

Soweit Übereinstimmung zwischen den Ausführungsbeispielen der Figuren 1 und 2 besteht, gelten die gleichen Bezugszahlen.

Figur 2 zeigt, dass zwei Verdrängerkörper vorgesehen sind, nämlich einen vor dem Permanentmagnetrotor 9 vorgesehenen Verdrängerkörper 13 und einen hinter dem Permanentmagnetrotor vorgesehenen Verdrängerkörper 15. Des Weiteren ist dargestellt, dass diese Verdrängerkörper drehfest an dem Spaltrohr 1 befestigt sind, beispielsweise durch Festsitz. In diesem Falle ist jeweils ein innerer Ringraum 16 und 17 zwischen den Verdrängerkörpern 13 und 15 einerseits und der Antriebswelle 8 anderseits vorgesehen, um eine vollständige Flutung oder Durchströmung des gesamten Innenraums des Spaltrohres 1 zu gewährleisten.

Alternativ oder zusätzlich zu den genannten Ringräumen können auch axiale Kanäle 18 als Durchflussmittel vorgesehen sein, die die Verdrängerkörper 13 und 15 durchqueren.

Wiederum alternativ oder zusätzlich können auch axiale oder teilweise wendelförmige Kanäle als Durchflussmittel auf der Umfangsfläche der Verdrängerkörper 13 und 15 vorgesehen sein, wie es für beide Fälle in Figur 2 gestrichelt angedeutet und mit 19 beziffert ist.

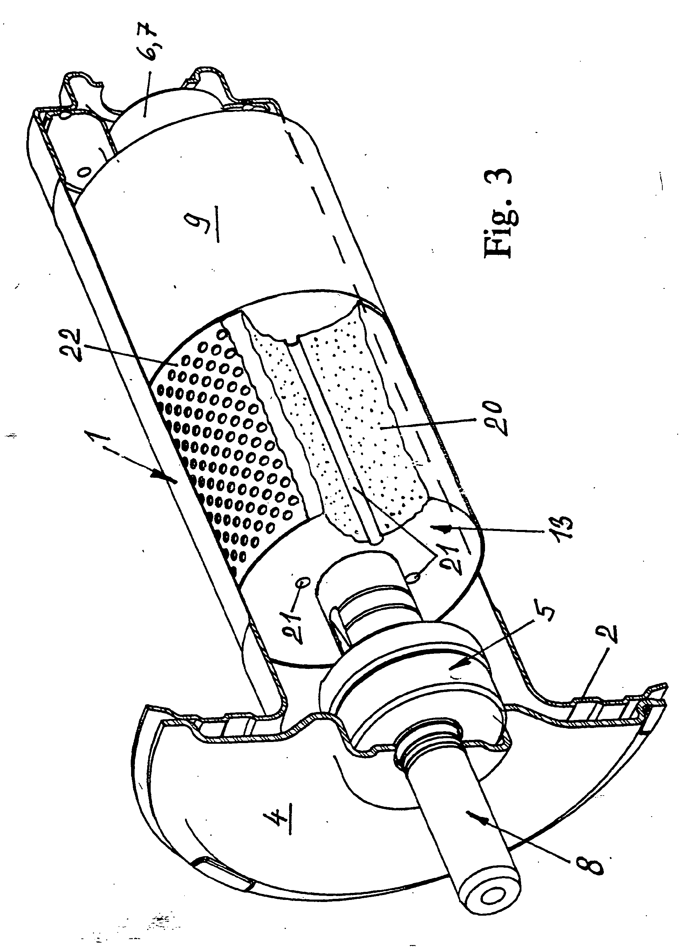

Bei dem Ausführungsbeispiel nach Figur 3 besteht der Verdrängerkörper 13, der auch hinter dem Permanentmagnetrotor angeordnet sein kann, aus einem magnetischen Material, das porös, also offenzellig ausgebildet ist, wie es in dem aufgebrochenen Bereich 20 des Verdrängerkörpers punktiert angedeutet ist. Ein solcher Körper kann z. B. ein Gitterkörper sein oder auf andere bekannte Weise porös hersgestellt werden. Mehrere Kanäle 21 durchdringen den Verdrängerkörper in Längsrichtung der Antriebswelle 8 und bewirken, dass der Verdrängerkörper, der in diesem Fall drehfest auf der Antriebswelle montiert ist, auf seiner gesamten Länge von der Flüssigkeit in dem Spaltrohr 1 radial durchströmt werden kann. Magnetitpartikel in der Flüssigkeit des Spaltrohres werden so herausgebildet und gelangen somit nicht oder nur in wesentlich herabgesetzter Menge zu dem Permanentmagnetrotor 9, um diesen und/oder den gegenüberliegenden Bereich des Spaltrohres nicht zu beeinträchtigen.

Der poröse Verdrängerkörper 13 kann mit einer gelochten, nur teilweise in Figur 3 gezeigten Metallhülse 22, die den Verdrängerkörper auf seinem Umfang vollständig abdeckt, zu seinem Schutz gegen Bersten umgeben sein.

Wenn zwei Verdrängerkörper 13, 15 vorgesehen sind, wie es in Verbindung mit Figur 2 beschrieben ist, kann erforderlichenfalls auch der oder nur der hintere Verdrängerkörper 15 als poröser Verdrängerkörper mit einer schützenden Metallhülse ausgebildet sein.

Außer in Heizungsanlagen kann der vorstehend beschriebene Antriebsmotor beispielsweise auch bei Umwälzpumpen für Klimaanlagen eingesetzt werden.

## Patentansprüche

1. Nasslaufender elektrischer Antriebsmotor für insbesondere eine Heizungsumwälzpumpe, wobei der Motor in einem Spaltrohr (1) einen auf einer Antriebswelle (8) drehfest montierten Rotor (9) aufweist, wobei das Spaltrohr (1) mit einem Permanentmagnetrotor (9) und mit mindestens einem Verdrängerkörper (13, 15) bestückt ist, **dadurch gekennzeichnet, dass** der Verdrängerkörper (13, 15) und der Permanentmagnetrotor (9) zusammen einen Raum einnehmen, der im Wesentlichen dem Raum entspricht, den ein Kurzschlussläuferrotor bei gleicher Leistung des Motors einnehmen würde, damit der Motor für den Ensatz sowohl dieses Kurzschlussläuferrotors als auch des Permanentmagnetrotors (9) geeignet ist, ohne dass das im Spaltrohr (1) befindliche Flüssigkeitsvolumen im letztgenannten Fall größer oder wesentlich größer ist als bei Verwendung des Kurzschlussläuferrotors.

2. Antriebsmotor nach Anspruch 1 **dadurch gekennzeichnet, dass** der Verdrängerkörper (13) vor oder hinter dem Permanentmagnetrotor (9) angeordnet ist.

3. Antriebsmotor nach Anspruch 1 **dadurch gekennzeichnet, dass** ein erster Verdrängerkörper (13) vor und ein weiterer Verdrängerkörper (15) hinter dem Permanentmagnetrotor (9) angeordnet ist.

4. Antriebsmotor nach Anspruch 1 oder 2, **dadurch gekennzeichnet dass** der oder die Verdrängerkörper (13,15) starr auf der Antriebswelle (8) oder drehfest in dem Spaltrohr (9) des Motors angeordnet ist bzw. sind.

5. Antriebsmotor nach Anspruch 3, **dadurch gekennzeichnet, dass** einer der Verdrängerkörper (13,15) drehfest auf der Antriebswelle (8) und der andere der Verdrängerkörper starr in dem Spaltrohr (1) des Motors angeordnet ist.

6. Antriebsmotor nach einem der Ansprüche 1 - 5, **dadurch gekennzeichnet, dass** der oder die Verdrängerkörper (13,15) Mittel (14,16,17,18,19) aufweisen, die einen Durchfluss eines Anteils aus dem Förderstrom der Pumpe zu dem Permanentmagnetrotor (9) und dem hinteren Gleitlager (7) für die Antriebswelle (8) erlauben.

7. Antriebsmotor nach Anspruch 6, **dadurch gekennzeichnet, dass** die Durchflussmittel aus axialen Kanälen (18,19) bestehen, die den oder die Verdrängerkörper (13,15) in Motorlängsrichtung durchqueren oder auf seiner bzw. ihrer Umfangsfläche vorgesehen sind.

8. Antriebsmotor nach Anspruch 6, **dadurch gekennzeichnet, dass** die Durchflussmittel aus einem äußeren Ringraum (14) bestehen, der zwischen der Umfangswand (13a) des Spaltrohres (1) und der gegenüberliegenden Umfangsseite des Verdrängerkörpers (13) ausgebildet ist, wobei der Außendurchmesser des Verdrängerkörpers kleiner ist als der des Permanentmagnetrotors (9).

9. Antriebsmotor nach Anspruch 6, **dadurch gekennzeichnet, dass** die Durchflussmittel aus einem inneren Ringraum (16,17) bestehen, der zwischen der Antriebswelle (8) und der dieser gegenüberliegenden Umfangsseite des oder der Verdrängerkörper (13,15) ausgebildet ist.

10. Antriebsmotor nach einem der Ansprüche 1 - 9, **dadurch gekennzeichnet, dass** der Verdrängerkörper aus nichtmagnetischem Material besteht.

11. Antriebsmotor nach einem der Ansprüche 1-10, **dadurch gekennzeichnet, dass** wenigstens ein Verdrängerkörper (13,15) aus magnetischem Material besteht, porös ausgebildet ist und in Längsrichtung der Antriebswelle (8) verlaufende Kanäle (21) aufweist und dass dieser Verdrängerkörper von einer gelochten Metallhülse (22) umgeben ist.

12. Antriebsmotor nach Anspruch 11, **dadurch gekennzeichnet, dass** der Verdrängerkörper (13,15) ein Sinterkörper ist.

## Claims

1. A wet-running electric drive motor, in particular for a heating circulation pump, wherein the motor in a can (1) comprises a rotor (9) which is assembled on a drive shaft (8) in a rotationally fixed manner, wherein the can (1) is equipped with a permanent magnet rotor (9) and with at least one displacement body (13, 15), **characterised in that** the displacement body (13, 15) and the permanent magnet rotor (9) together assume a space, which essentially corresponds to the space which a squirrel-cage rotor with the same power of the motor would assume, so that the motor is suitable for the application of this squirrel-cage rotor as well as the permanent magnet rotor (9), without the fluid volume located in the can (1) in the latter mentioned case being larger or significantly larger than with the use of a squirrel-cage rotor.

2. A drive motor according to claim 1, **characterised in that** the displacement body (13) is arranged in front of or behind the permanent magnet rotor (9).

3. A drive motor according to claim 1, **characterised in that** a first displacement body (13) is arranged in front of, and a further displacement body (15), is arranged behind the permanent magnet rotor (9).

4. A drive motor according to claim 1 or 2, **characterised in that** the displacement body or bodies (13, 15) is or are arranged rigidly on the drive shaft (8), or in the can (9) of the motor in a rotationally fixed manner.

5. A drive motor according to claim 3, **characterised in that** one of the displacement bodies (13, 15) is arranged on the drive shaft (8) in a rotationally fixed manner, and the other of the displacement bodies is arranged rigidly in the can (1) of the motor.

6. A drive motor according to one of the claims 1 to 5, **characterised in that** the displacement body or bodies (13, 15) comprise means (14, 16, 17, 18, 19) which permit a through-flow of a fraction from the delivery flow of the pump to the permanent magnet rotor (9) and to the rear sliding bearing (7) for the drive shaft (8).

7. A drive motor according to claim 6, **characterised in that** the through-flow means consist of axial channels (18, 19) which cross the displacement body or bodies (13, 15) in the motor longitudinal direction, or are provided on its or their peripheral surface.

8. A drive motor according to claim 6, **characterised in that** the through-flow means consist of an outer annular space (14) which is formed between the peripheral wall (13a) of the can (1) and the opposite peripheral side of the displacement body (13), wherein the outer diameter of the displacement body is smaller than the diameter of the permanent magnet rotor (9).

9. A drive motor according claim 6, **characterised in that** the through-flow means consist of an inner annular space (16, 17) which is formed between the drive shaft (8) and the peripheral side of the displacement body or bodies (13, 15), said peripheral side lying opposite the drive shaft.

10. A drive motor according to one of the claims 1 to 9, **characterised in that** the displacement body consists of non-magnetic material.

11. A drive motor according to one of the claims 1 to 10, **characterised in that** at least one displacement body (13, 15) consists of magnetic material, is designed in a porous manner and comprises channels (21) running in the longitudinal direction of the drive shaft (8), and that this displacement body is surrounded by a perforated metal sleeve (22).

12. A drive motor according to claim 11, **characterised in that** the displacement body (13, 15) is a sintered body.

## Revendications

1. Moteur d'entraînement électrique à rotor immergé, destiné notamment à une pompe de circulation pour le chauffage, le moteur présentant, dans une gaine (1), un rotor (9) monté, bloqué en rotation, sur un arbre d'entraînement (8), la gaine (1) étant garnie d'un rotor à aimants permanents (9) et d'au moins un corps déplaceur (13, 15), **caractérisé en ce que** le corps déplaceur (13, 15) et le rotor à aimants permanents (9) occupent ensemble un espace qui correspond sensiblement à l'espace qu'occuperait un rotor à induit en court-circuit, pour une même puissance du moteur, afin que le moteur se prête à l'utilisation aussi bien de ce rotor à induit en court-circuit que du rotor à aimants permanents (9), sans que le volume de liquide présent dans la gaine (1) soit, dans le dernier cas mentionné, plus grand ou sensiblement plus grand que dans le cas de l'emploi du rotor à induit en court-circuit.

2. Moteur d'entraînement selon la revendication 1, **caractérisé en ce que** le corps déplaceur (13) est disposé devant ou derrière le rotor à aimants permanents (9).

3. Moteur d'entraînement selon la revendication 1, **caractérisé en ce qu'**un premier corps déplaceur (13) est disposé devant et un autre corps déplaceur (15) est disposé derrière le rotor à aimants permanents (9).

4. Moteur d'entraînement selon la revendication 1 ou 2, **caractérisé en ce que** le ou les corps déplaceur(s) (13, 15) est, respectivement sont, disposé(s) rigidement sur l'arbre d'entraînement (8) ou bloqué(s) en rotation dans la gaine (9) du moteur.

5. Moteur d'entraînement selon la revendication 3, **caractérisé en ce que** l'un des corps déplaceurs (13, 15) est disposé sur l'arbre d'entraînement (8), bloqué en rotation sur celui-ci, et l'autre corps déplaceur est disposé fixe dans la gaine (1) du moteur.

6. Moteur d'entraînement selon l'une des revendications 1 à 5, **caractérisé en ce que** le ou les corps déplaceur(s) (13, 15) présentent des moyens (14, 16, 17, 18, 19) qui permettent un passage d'une partie du flux transporté par la pompe, vers le rotor à aimants permanents (9) et le palier lisse arrière (7) pour l'arbre d'entraînement (8).

7. Moteur d'entraînement selon la revendication 6, **caractérisé en ce que** les moyens de passage sont constitués par des canaux axiaux (18, 19), qui traversent le ou les corps déplaceur(s) (13, 15), dans la direction longitudinale du moteur, ou sont prévus sur sa, respectivement leur, surface périphérique.

8. Moteur d'entraînement selon la revendication 6, **caractérisé en ce que** les moyens de passage sont constitués par un espace annulaire extérieur (14), qui est ménagé entre la paroi périphérique (13a) de la gaine (1) et la face périphérique, placée en vis-à-vis, du corps déplaceur (13), le diamètre extérieur du corps déplaceur étant alors plus petit que celui du rotor à aimants permanents (9).

9. Moteur d'entraînement selon la revendication 6, **caractérisé en ce que** les moyens de passage sont constitués par un espace annulaire intérieur (16, 17), qui est ménagé entre l'arbre d'entraînement (8) et la face périphérique, placée en vis-à-vis de celui-ci, du ou des corps déplaceur(s) (13, 15).

10. Moteur d'entraînement selon l'une des revendications 1 à 9, **caractérisé en ce que** le corps déplaceur est réalisé en un matériau amagnétique.

11. Moteur d'entraînement selon l'une des revendications 1 à 10, **caractérisé en ce qu'**au moins un corps déplaceur (13, 15) est réalisé en un matériau magnétique, est conçu poreux et présente des canaux (21) se développant dans la direction longitudinale de l'arbre d'entraînement (8) et **en ce que** ce corps déplaceur est entouré d'un manchon métallique perforé (22).

12. Moteur d'entraînement selon la revendication 11, **caractérisé en ce que** le corps déplaceur (13, 15) est un corps fritté.
